# FASCICULE DE BREVET EUROPEEN

(11) **EP 1 447 747 B1**
(45) Date de publication et mention de la délivrance du brevet: **01.08.2007**
(21) Numéro de dépôt: 04000574.6
(22) Date de dépôt: 14.01.2004
(51) Int. Cl.: G06F 9/38, G06F 9/46, G06F 9/30

(54) **Procédé de gestion d'une pile de microprocesseur pour la sauvegarde de données contextuelles**
Verfahren zur Verwaltung eines Mikroprozessorstapels für die Sicherung von kontextuellen Daten
Microprocessor stack management method for saving context data

(30) Priorité: 17.02.2003 FR 0301879
(43) Date de publication de la demande: 18.08.2004
(73) Titulaire: STMicroelectronics SA, 92210 Montrouge (FR)
(72) Inventeur: Padmanabha, Gosagan, 13100 Aix en Provence (FR); Davidescu, Dragos, 13100 Aix en Provence (FR); Roche, Franck, 13530 Trets (FR)
(74) Mandataire: Marchand, André

(56) Documents cités:
- WO-A-02/13005
- US-B1- 6 205 467
- US-B1- 6 367 005

## Description

La présente invention concerne les microprocesseurs, et plus particulièrement un procédé de gestion de la pile d'un microprocesseur pour la sauvegarde de données contextuelles lors d'un basculement d'un premier à un second programme.

La présente invention vise en particulier la réalisation d'un microprocesseur à plan mémoire étendu qui soit compatible avec un microprocesseur à plan mémoire réduit.

WO-A-0213005 divulgue un processeur permettant la sauvegarde de contexte lors d'un basculement de programmes. Le microcode des instructions de sauvegarde et de restauration est étendu pour permettre la sauvegarde et la restauration de registres étendus en cas de changement de contexte.

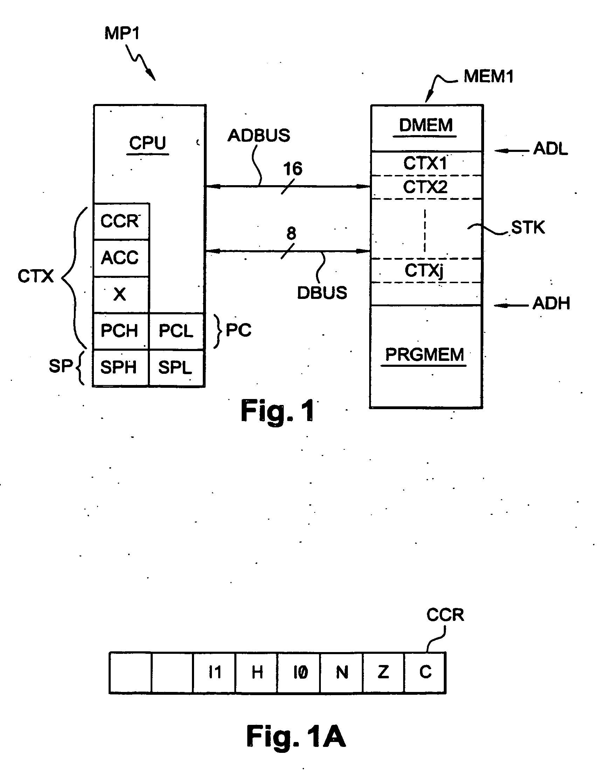

La figure 1 représente de façon très schématique un microprocesseur 8 bits de première génération MP1 commercialisé par la demanderesse. Le microprocesseur comprend une unité centrale ou CPU et un plan mémoire MEM1 adressable par l'intermédiaire d'un bus d'adresse ADBUS de 16 bits et accessible par l'intermédiaire d'un bus de données DBUS de 8 bits. Le plan mémoire présente ainsi une taille maximale dé 64 Koctets (2¹⁶ octets) et comprend diverses zones mémoire parmi lesquelles on distingue notamment une zone mémoire volatile DMEM, pour enregistrer des données d'application, une zone mémoire volatile formant une pile STK ("Stack"), ainsi qu'une zone mémoire programme PRGMEM non volatile pour enregistrer un ou plusieurs programmes application. Les zones mémoire volatiles sont par exemple de type RAM et les zones mémoire non volatiles de type ROM, EPROM, EEPROM ou Flash.

Le CPU comprend divers registres de 8 bits dans lesquels sont stockées des données contextuelles CTX. On distingue un registre de code condition CCR, un accumulateur ACC, un registre d'index X, et des registres PCL, PCH recevant respectivement l'octet de poids faible et l'octet de poids fort d'un compteur ordinal PC ("program counter"). Pendant l'exécution d'un programme, le compteur ordinal PC désigne l'adresse de l'instruction suivante à exécuter et est incrémenté après lecture de l'instruction précédente. Le registre d'index X contient des données nécessaires à l'exécution d'instructions avec adressage indexé ou d'opérations prévues par un programme application. L'accumulateur ACC contient le résultat de calculs ou d'opérations effectuées par l'unité arithmétique et logique du CPU (non représentée).

Comme représenté en figure 1A, le registre CCR contient des drapeaux (flags) indiquant des résultats d'opérations ou d'instructions, typiquement les drapeaux C (Carry), Z (Zéro), N (Négatif), H (Half Carry), IO et I1 (masques d'interruption) et contient ici deux emplacements (deux bits) non utilisés.

Lorsque le CPU bascule d'un programme en cours d'exécution à un autre programme, généralement un sous-programme d'interruption, le CPU sauvegarde dans la pile STK les données contextuelles CTX présentes dans les registres CCR, ACC, X, PCH, PCL puis lit l'adresse de la première instruction du sous-programme à un emplacement de la mémoire programme PRGMEM désigné par un vecteur d'interruption, charge cette nouvelle adresse dans le compteur ordinal PC, dont le contenu initial a été sauvegardé dans la pile, et exécute le sous-programme.

La sauvegarde des données contextuelles CTX est effectuée octet par octet dans la pile STK, à partir d'une adresse basse ADL et jusqu'à une adresse haute ADH qui sont invariables et fixées par le constructeur. L'adresse de sauvegarde des données contextuelles est indiquée par un pointeur de pile SP ("Stack Pointer") stocké dans des registres SPL, SPH du CPU, ces registres contenant respectivement l'octet de poids faible et l'octet de poids fort du pointeur de pile. Après chaque sauvegarde d'un octet de données contextuelles, le pointeur de pile est incrémenté d'une unité.

La taille de la pile et le nombre d'octets de données contextuelles à sauvegarder à chaque basculement d'un programme à un autre, détermine le nombre de basculements dans des programmes imbriqués pouvant être effectués par le CPU, soit le nombre d'interruptions en latence pouvant être traitées successivement de façon cumulative. Si les données contextuelles comprennent cinq octets comme indiqué plus haut, et si la pile s'étend par exemple sur 25 lignes du plan mémoire MEM1, le CPU peut effectuer 25/5 soit 5 basculements en cascade sans débordement de la pile. On trouve ainsi dans la pile des données contextuelles empilées CTX1, CTX2, CTX3, ... CTXj comme représenté en figure 1.

A chaque retour à un programme initial (qui peut être un sous-programme d'interruption dans le cas de sous-programmes imbriqués) les données contextuelles mémorisées dans la pile STK sont récupérées par le CPU à l'emplacement indiqué par le pointeur de pile SP, l'état des registres CCR, ACC, X, PCH, PCL est restauré et le CPU reprend l'exécution du programme initial à l'endroit où il avait été interrompu. A chaque restauration d'un octet de données contextuelles, le pointeur de pile est décrémenté d'une unité, selon le principe d'empilement/dépilement LIFO ("Last In First Out") dans lequel la dernière donnée entrée est la première donnée lue.

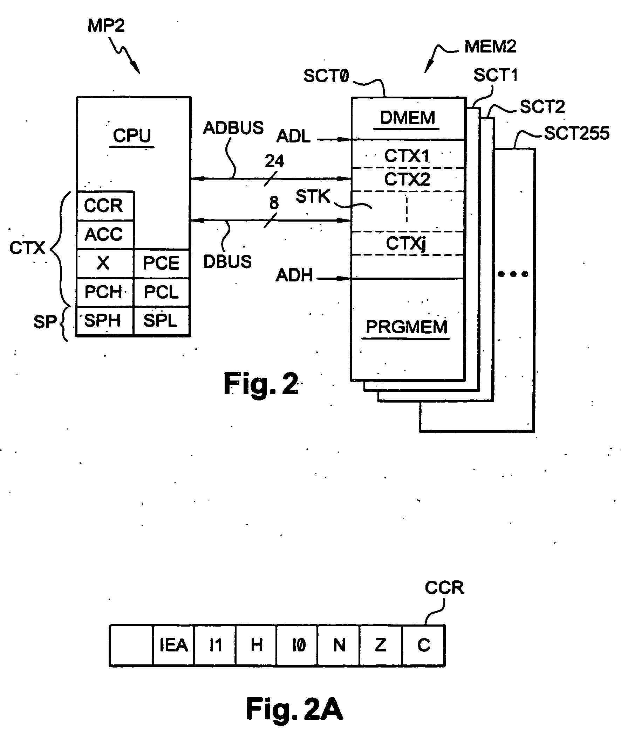

La figure 2 représente schématiquement un microprocesseur 8 bits MP2 de nouvelle génération, visé par la demanderesse. Le microprocesseur MP2 se distingue du microprocesseur MP1 par le fait qu'il comprend un plan mémoire étendu MEM2 adressable sous 24 bits au lieu de 16 bits, via le bus d'adresse ADBUS. Ainsi, le plan mémoire MEM2 comprend ici 256 secteurs SCT0, SCT1, ... SCT255 de 64 KO chacun, et le premier secteur SCT0 correspond au plan mémoire MEM1 du microprocesseur MP1.

Cette extension du plan mémoire nécessite la prévision dans le CPU d'un registre supplémentaire PCE ("Program Counter Extended Address"), pour obtenir un compteur ordinal PC dé 24 bits au lieu de 16, adapté à la taille du plan mémoire étendu.

A chaque basculement d'un premier à un second programme, le CPU doit alors sauvegarder dans la pile STK le contenu des six registres CCR, ACC, X, PCE, PCH, PCL, soit six octets de données contextuelles CTX au lieu de cinq.

Il est souhaité que le microprocesseur MP2 soit compatible avec le microprocesseur MP1, c'est-à-dire qu'il puisse recevoir et exécuter des programmes application développés pour le microprocesseur MP1. L'espace alloué à la pile STK doit ainsi rester constant est reste délimité par les adresses ADL, ADH dans le secteur SCT0. Dans le cas contraire, si un changement de la taille et/ou de l'emplacement de la pile du microprocesseur était prévu, un tel changement pourrait conduire à un empiètement des données de programme et des données d'application du programme conçu pour le microprocesseur MP1, sur l'emplacement de la pile du microprocesseur MP2.

Toutefois Le problème suivant apparaît : la taille de la pile STK étant maintenue constante, la prévision du registre d'adressage étendu PCE limite le nombre de programmes pouvant être imbriqués puisqu'un octet de données contextuelles supplémentaire doit être sauvegardé. En reprenant l'exemple d'une pile comprenant 25 emplacements de sauvegarde, le nombre de programmes pouvant être imbriqués est maintenant de 25/6 soit 4 au lieu de 5 (une ligne de la pile STK restant inutilisée).

Ceci constitue un obstacle à la compatibilité visée, car un programme développé pour l'ancienne génération de microprocesseurs pourrait exploiter au maximum les ressources de la pile. L'exécution d'un tel programme va se traduire par l'apparition d'un dysfonctionnement puisque le CPU ne pourra pas incrémenter le pointeur de pile au-delà de l'adresse ADH, de sorte que des données contextuelles vont être perdues.

La présente invention vise, notamment, à pallier cet inconvénient.

Plus particulièrement, un objectif de l'invention est de préserver la compatibilité entre deux générations de microprocesseurs se distinguant par une extension du plan mémoire et une extension de la taille du compteur ordinal.

Un objectif plus général de la présente invention est de prévoir un procédé de sauvegarde de données contextuelles permettant d'optimiser la gestion de l'espace alloué à la pile afin de maintenir un degré élevé d'imbrication de programmes.

Ces objectifs sont atteints par la prévision d'un microprocesseur comprenant une unité centrale et un plan mémoire, l'unité centrale comprenant des registres contenant des données contextuelles et un pointeur de pile, le plan mémoire comprenant une pile pour la sauvegarde de données contextuelles, l'unité centrale étant agencée pour sauvegarder des données contextuelles lors d'un basculement d'un premier à un second programme, avec la particularité que l'unité centrale est agencée pour sauvegarder des données contextuelles contenues dans un nombre variable de registres qui est fonction de la valeur d'au moins un drapeau stocké dans un registre à sauvegarder.

Selon un mode de réalisation, l'unité centrale est agencée pour modifier la valeur du drapeau en fonction du contenu d'un registre, avant de sauvegarder des données contextuelles contenues dans un nombre variable de registres qui est fonction de la valeur du drapeau.

Selon un mode de réalisation, l'unité centrale est agencée pour modifier la valeur du drapeau en fonction du contenu d'un registre d'adressage étendu d'un compteur ordinal de l'unité centrale.

Selon un mode de réalisation, l'unité centrale est agencée pour, quand le contenu du registre d'adressage étendu est égal à 0, sauvegarder tous les registres de l'unité centrale contenant des données contextuelles à l'exception du registre d'adressage étendu, ou quand le contenu du registre d'adressage étendu n'est pas égal à 0, sauvegarder tous les registres de l'unité centrale contenant des données contextuelles y compris le registre d'adressage étendu.

Selon un mode de réalisation, l'unité centrale est agencée pour effectuer un test sur la valeur du drapeau afin de déterminer le nombre de registres à sauvegarder.

Selon un mode de réalisation, l'unité centrale est agencée pour, lors du retour au premier programme, restaurer le registre contenant le drapeau et restaurer des données contextuelles contenues dans un nombre variable de registres qui est fonction de la valeur du drapeau présent dans le registre restauré.

Selon un mode de réalisation, l'unité centrale est agencée pour sauvegarder en dernier le registre contenant le drapeau.

Selon un mode de réalisation, le drapeau comprend au moins un bit d'un registre contenant des drapeaux de code condition.

L'invention concerne également un procédé de gestion de la pile d'un, microprocesseur comprenant une unité centrale et un plan mémoire, l'unité centrale comprenant des registres contenant des données contextuelles et un pointeur de pile, la pile étant une zone du plan mémoire dédiée à la sauvegarde de données contextuelles lors d'un basculement d'un premier à un second programme, le procédé comprenant la sauvegarde de données contextuelles contenues dans un nombre variable de registres qui est fonction de la valeur d'au moins un drapeau stocké dans un registre à sauvegarder.

Selon un mode de réalisation, le procédé comprend une étape de modification de la valeur du drapeau en fonction du contenu d'un registre, avant la sauvegarde de données contextuelles contenues dans un nombre variable de registres qui est fonction de la valeur du drapeau.

Selon un mode de procédé, la valeur du drapeau est modifiée en fonction du contenu d'un registre d'adressage étendu d'un compteur ordinal de l'unité centrale.

Selon un mode de réalisation, le procédé comprend des étapes dans lesquelles, quand le contenu du registre d'adressage étendu est égal à 0, sauvegarder tous les registres de l'unité centrale contenant des données contextuelles à l'exception du registre d'adressage étendu, ou quand le contenu du registre d'adressage étendu n'est pas égal à 0, sauvegarder tous les registres de l'unité centrale contenant des données contextuelles y compris le registre d'adressage étendu.

Selon un mode de réalisation, le procédé comprend une étape de test de la valeur du drapeau pour déterminer le nombre de registres contenant les données à sauvegarder.

Selon un mode de réalisation, le procédé comprend des étapes de restauration du registre contenant le drapeau, puis de restauration de données contextuelles contenues dans un nombre variable de registres qui est fonction de la valeur du drapeau présent dans le registre restauré.

Selon un mode de réalisation, le registre contenant le drapeau est sauvegardé le dernier et est restauré le premier.

Selon un mode de réalisation, le drapeau est formé par au moins un bit d'un registre contenant des drapeaux de code condition.

Ces objets, caractéristiques et avantages, ainsi que d'autres de la présente invention, seront exposés plus en détail dans la description ci-après de deux modes de réalisation d'un microprocesseur selon l'invention, faite à titre non limitatif en relation avec les figures jointes parmi lesquelles :
- la figure 1 précédemment décrite représente sous forme de bloc l'architecture d'un microprocesseur classique,
- la figure 1A représente le contenu d'un registre du microprocesseur de la figure 1,
- la figure 2 représente sous forme de bloc l'architecture d'un microprocesseur selon l'invention, ayant un plan mémoire étendu,
- la figure 2A représente le contenu d'un registre du microprocesseur de la figure 2,
- la figure 3 est un organigramme représentant des étapes d'empilement de données selon un procédé de gestion de pile selon l'invention,
- la figure 4 est un organigramme représentant des étapes de dépilement de données selon le procédé de gestion de pile selon l'invention,
- la figure 5 représente l'architecture d'un microprocesseur comprenant un nombre quelconque de données contextuelles, et illustre une généralisation du procédé de l'invention à un tel microprocesseur,
- la figure 6 est un organigramme représentant des étapes d'empilement de données selon une variante du procédé de gestion de pile selon l'invention, et,
- la figure 7 est un organigramme représentant des étapes de dépilement de données selon la variante du procédé de gestion de pile selon l'invention.

La figure 2 déjà décrite représente schématiquement l'architecture d'un microprocesseur à plan mémoire étendu MP2 dans lequel est mis en oeuvre un procédé de gestion de pile STK selon l'invention.

Comme indiqué précédemment, le compteur ordinal PC comprend ici 24 bits stockés en trois octets dans des registres PCE, PCH, PCL du CPU. Le plan mémoire étendu MEM2 comporte 256 secteurs SCT0 à SCT255 de 64 Koctets chacun.

Le CPU est agencé pour exécuter, en sus d'un jeu d'instructions de nouvelle génération permettant de travailler sur toute l'étendue du plan mémoire, un jeu d'instructions simplifiées permettant de travailler sur le premier secteur SCT0, lequel conserve la même structure que le plan mémoire MEM1 du microprocesseur MP1 de première génération représenté en figure 1, afin que les deux générations de microprocesseurs soient compatibles.

Lors de l'exécution de ces instructions simplifiées, le registre d'adressage étendu PCE du compteur ordinal PC est remis à zéro et est laissé à zéro, puisque les instructions des programmes d'ancienne génération sont enregistrées dans le premier secteur SCT0, dont les adresses sont codées uniquement sur 16 bits et peuvent être gérées au moyen des registres PCH, PCL. Le nouveau jeu d'instructions est par contre destiné à des programmes enregistrés dans tous les secteurs SCT1 à SCT255 et utilise le registre PCE.

Le CPU, qui est classiquement une machine d'état à logique câblée ou une machine logique microprogrammée, est conçu pour sauvegarder les données contextuelles présentes dans les registres CCR, ACC, X, PCH, PCL, CPE conformément à un procédé de gestion de pile selon l'invention.

Selon ce procédé, le CPU ne sauvegarde pas le contenu du registre d'adressage étendu PCE lorsque celui-ci est nul. De plus, une information indiquant que le registre d'adressage étendu PCE a été ou non sauvegardé est insérée dans les données contextuelles afin que le CPU sache, lors de la restauration des données contextuelles, quel est le nombre de données à lire dans la pile STK. Dans l'exemple de réalisation décrit ici à titre d'exemple, le registre de code condition CCR du microprocesseur MP1 de première génération contient deux emplacements disponibles. L'un de ces emplacements est utilisé dans le microprocesseur MP2 pour stocker un drapeau IEA dont la valeur 1 ou 0 forme l'information susmentionnée.

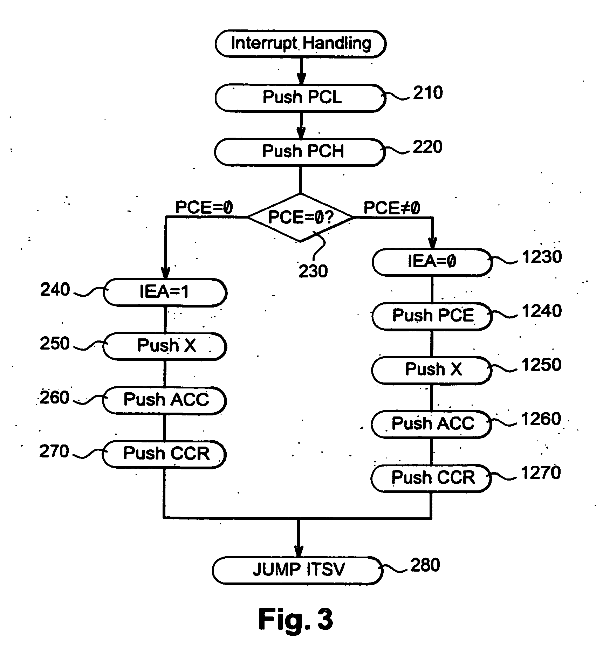

La figure 3 est un organigramme intitulé "Interrupt Handling Sequence" (séquence de traitement d'une interruption) décrivant des opérations de sauvegarde (instructions "PUSH") de données contextuelles dans la pile STK, exécutées par le CPU.

Le CPU sauvegarde tout d'abord le registre PCL et le registre PCH au cours de deux étapes 210 et 220. A l'étape 230 suivante, le CPU teste le contenu du registre PCE.

Si le contenu du registre PCE est nul, le CPU met le drapeau IEA à 1 dans le registre de code condition CCR au cours d'une étape 240. Le CPU exécute ensuite des étapes 250, 260, 270 au cours desquelles il sauvegarde successivement les registres d'index X, d'accumulateur ACC puis de code condition CCR (contenant le drapeau IEA à 1), sans sauvegarder le registre PCE. Le CPU exécute ensuite une étape 280 "JUMP ITSV" ("Jump to Interrupt Service Routine") de saut à une adresse d'exécution d'un sous-programme de traitement de l'interruption, fournie par un vecteur d'interruption.

Si au contraire le contenu du registre PCE n'est pas nul, le CPU met à 0 le drapeau IEA et exécute des étapes 1240, 1250, 1260, 1270 au cours desquelles il sauvegarde successivement les registres PCE, X, ACC et CCR (contenant le drapeau IEA à 0). Le CPU exécute ensuite l'étape 280 "JUMP ITSV" de saut au sous-programme d'interruption.

Ainsi, le nombre de données contextuelles sauvegardées dans la pile est limité aux cinq registres PCL, PCH, X, ACC et CCR lorsque le registre PCE est nul.

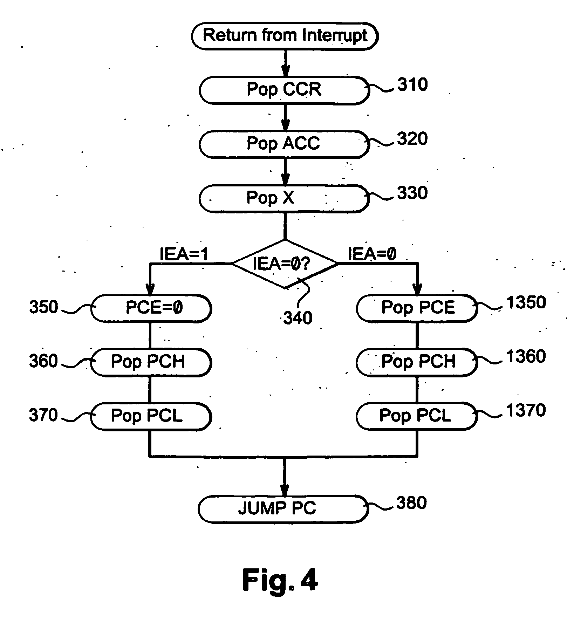

La figure 4 est un organigramme intitulé "Return from Interrupt " (retour de l'interruption) représentant les opérations de restauration des données contextuelles après exécution du sous-programme d'interruption.

Le CPU procède à une récupération des données (instruction "POP") dans l'ordre inverse de leur sauvegarde, selon le principe d'empilement/dépilement LIFO, par déstockage des données contextuelles de la pile et restauration des registres en commençant par les dernières données enregistrées dans la pile.

Au cours d'étapes 310, 320 et 330, le CPU restaure tout d'abord les registres CCR, ACC et X, successivement. A une étape suivante 340, le CPU teste la valeur du drapeau IEA dans le registre CCR, qui a été restauré à l'étape 310.

Si le drapeau IEA est à 1, le CPU met à zéro le registre d'adressage programme étendu PCE au cours d'une étape 350, puis restaure les registres PCH et PCL du compteur ordinal PC au cours d'étapes 360, 370. Le CPU exécute ensuite une étape 380 "JUMP PC" au cours de laquelle il saute à l'adresse contenue dans le compteur ordinal PC tel que restauré, pour reprendre l'exécution du programme initial.

Si au contraire le drapeau IEA est à 0, le CPU restaure les trois registres PCE, PCH et PCL du compteur ordinal au cours d'étapes 1350, 1360, 1370, puis va à l'étape de saut 380.

L'étape de test 340 peut être une étape implicite si le CPU est une machine d'état à logique câblée. Dans ce cas, le branchement de l'étape 330 aux étapes 350 ou 1350 est fonction du drapeau IEA utilisé en tant que bit agissant sur les transitions d'un état à un autre de la machine d'état.

Ainsi, tous les registres de l'unité centrale CCR, ACC, X, PCH, PCL sans oublier le registre d'adressage étendu PCE et le pointeur de pile SPH, SPL sont entièrement rétablis dans leur état initial.

Le procédé de gestion de pile selon l'invention permet ainsi d'assurer la compatibilité du microprocesseur MP2 avec les programmes développés sur la première génération de microprocesseur MP1. Avec de tels programmes, le contenu du registre PCE est toujours nul et le registre PCE n'est jamais sauvegardé. Le nombre maximal d'imbrications de sous-programmes est ainsi conservé et les risques de débordement de la pile sont écartés.

Le registre PCE n'est également pas sauvegardé quand son contenu est nul lors de l'exécution d'un programme élaboré au moyen du nouveau jeu d'instructions, ce qui permet alors d'optimiser le remplissage de la pile, de réduire le nombre d'opérations effectuées par le CPU pour la sauvegarde et la restauration du contexte, de gagner quelques cycles d'opération et d'accélérer le traitement des interruptions.

La présente invention est ainsi susceptible de diverses applications, indépendamment du problème de compatibilité entre microprocesseurs. De façon générale, le fait que le registre PCE ne soit pas sauvegardé lorsque son contenu est nul permet d'économiser l'espace disponible dans la pile et d'augmenter le nombre d'imbrications de sous-programmes. Ce mécanisme de sauvegarde conditionnelle d'un registre peut par ailleurs être étendu à d'autres registres que le registre PCE.

Ainsi, une généralisation du procédé qui vient d'être décrit comprend la sauvegarde d'un nombre variable de registres en fonction de la valeur d'un drapeau stocké dans l'un des registres à sauvegarder, comme ceci apparaîtra à la lumière de la description suivante d'un second exemple de réalisation du procédé selon l'invention.

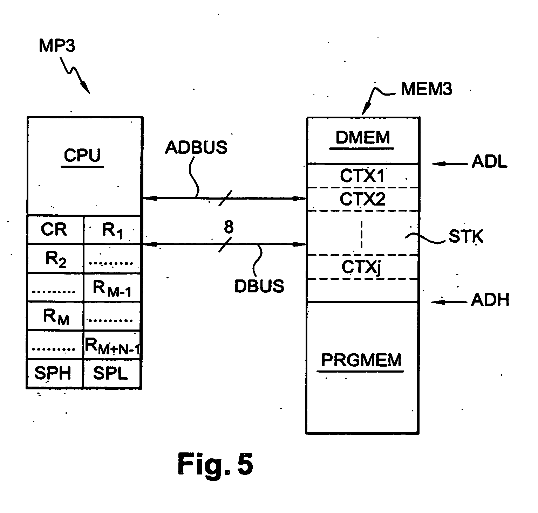

La figure 5 représente un microprocesseur MP3 comprenant, comme le précédent, une unité centrale CPU et un plan mémoire MEM3 dans lequel une zone de taille fixe forme la pile STK du CPU. Le CPU comprend ici un nombre quelconque de registres CR, R1, R2, ... R_{M-1}, R_{M}, ... R_{M+N-1}, par exemple des registres de 8 bits, contenant des données contextuelles. Le CPU comprend également des registres SPH, SPL contenant les deux octets du pointeur de pile SP. Parmi les registres de données contextuelles, les registres CR, R1 à R_{M-1} contiennent des données contextuelles de type essentiel et les registres R_{M} à R_{M+N-1} contiennent des données contextuelles de type non essentiel, susceptibles de n'être pas utilisées par un programme application. D'autre part un registre particulier, ici le registre CR, est dédié au stockage d'un drapeau ISV accessible en lecture et en écriture à l'utilisateur du microprocesseur, c'est-à-dire accessible au programme application développé par l'utilisateur.

La valeur du drapeau ISV est contrôlée par le programme d'application pour faire varier le nombre de registres sauvegardés lors du basculement dans un sous-programme.

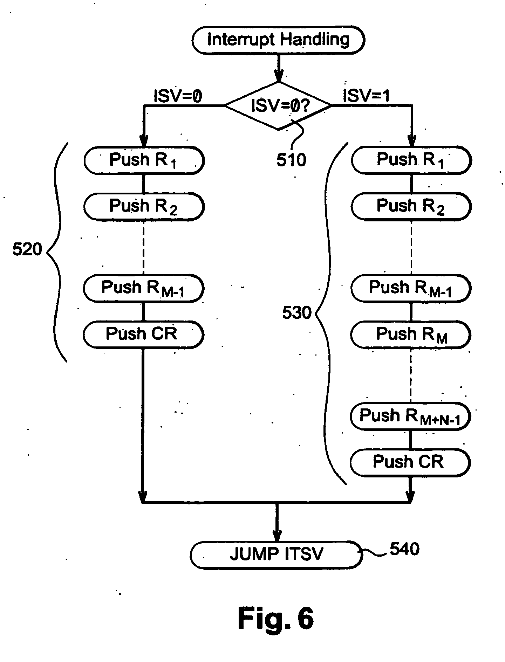

La figure 6 est un organigramme intitulé "Interrupt Handling" représentant des étapes de sauvegarde de données contextuelles exécutées par le CPU en réponse à un signal d'interruption.

Au cours d'une étape 510, le CPU teste l'état du drapeau ISV contenu dans le registre CR.

Si le drapeau ISV est à 0, le CPU exécute une série 520 d'étapes de sauvegarde dans la pile STK du contenu de M registres, ici les registres R1, R2, ... R_{M-1}, CR, le registre CR étant sauvegardé en dernier. Ainsi, M octets de données contextuelles sont sauvegardés et le pointeur de pile est incrémenté par M. Le CPU exécute ensuite une étape 540 "JUMP ITSV" ("Jump to Interrupt Service Routine") de saut à une adresse fournie par un vecteur d'interruption, pour l'exécution d'un sous-programme de traitement de l'interruption.

Si au contraire le drapeau ISV est à 1, le CPU exécute une série 530 d'étapes de sauvegarde dans la pile STK de la totalité des M+N registres R1, R2,.. R_{M-1}, R_{M}, ... R_{M+N-1}, CR, le registre CR étant sauvegardé en dernier. Ainsi, M+N octets de données contextuelles sont sauvegardés et le pointeur de pile est incrémenté par M+N. Le CPU va à l'étape de saut 540, pour exécuter le sous-programme d'interruption.

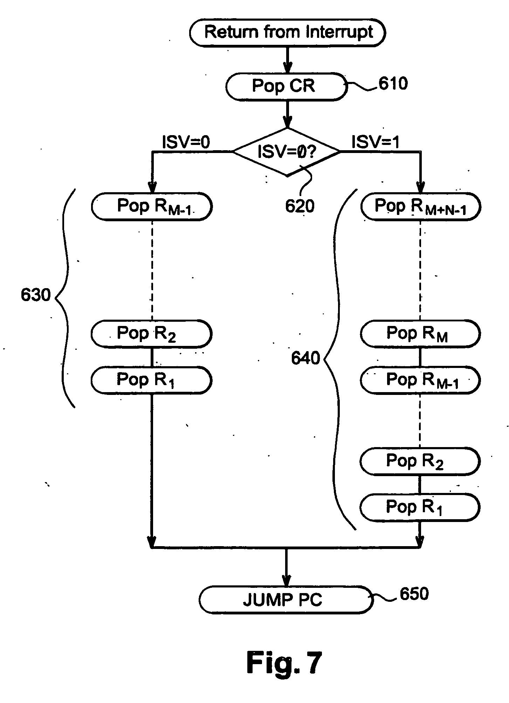

La figure 7 est un organigramme intitulé "Return from Interrupt" illustrant les étapes de restauration des registres du CPU lors du retour au programme initial.

Comme précédemment, les derniers registres sauvegardés dans la pile sont les premiers à être restaurés.

Ainsi, le CPU restaure tout d'abord le registre CR au cours d'une étape 610. Le CPU teste ensuite au cours d'une étape 620 le drapeau ISV présent dans le registre restauré.

Si le drapeau ISV est à 0, le CPU exécute une série 630 d'étapes de restauration des registres R_{M-1}, ... R2, R1, en déchargeant de la pile les M-1 octets suivants. Ensuite, au cours d'une étape 650 "JUMP PC", le CPU saute à l'adresse contenue dans le compteur ordinal PC pour reprendre l'exécution du programme initial.

Si le drapeau ISV est à 1, le CPU exécute une série 640 d'étapes de restauration des registres R_{M+N+1}, ... R_{M}, R_{M-1}, ... R2, R1, en déchargeant de la pile les M+N-1 octets suivants, puis va à l'étape de saut 650.

L'étape de test 620 peut, ici également, être implicite si le CPU est une machine d'état à logique câblée. Le branchement de l'étape 610 à l'étape 630 ou à l'étape 640 est alors déterminé par le drapeau ISV en tant que bit agissant sur les transitions d'états de la machine d'état.

Il apparaîtra clairement à l'homme de l'art que la présente invention est susceptible de diverses autres variantes. La sauvegarde des registres peut notamment être réalisée dans un ordre différent, par exemple de la manière suivante :
- si ISV=0, sauvegarde du registre CR puis sauvegarde des registres R1 à R_{M-1}, ou
- si ISV=1, sauvegarde des registres R_{M} à R_{M+N-1}, puis sauvegarde du registre CR, puis sauvegarde des registres R1 à R_{M-1}.

Puis, au moment de la restauration :
- restauration des registres R1 à R_{M-1},
- restauration du registre CR,
- si ISV=1, restauration des registres R_{M} à R_{M+N-1}.

La sauvegarde et la restauration conditionnelles selon l'invention peuvent également concerner plusieurs groupes de registres si un indicateur à plusieurs drapeaux est prévu. Par exemple, un indicateur à deux drapeaux ISF1, ISF2 permet de définir 4 configurations différentes de sauvegarde, et de définir quatre groupes différents de registres à sauvegarder, les registres contenant des données contextuelles essentielles étant compris dans chacun des groupes de registres.

La présente invention est également susceptible de diverses applications. Ainsi, le terme microprocesseur ne présente aucun caractère limitatif, la présente invention s'appliquant de façon générale à tout type de circuit intégré comportant une unité centrale pour exécuter des programmes, et comprenant des données contextuelles à sauvegarder lors du basculement d'un programme à un autre, tels les microcontrôleurs, les DSP (processeurs de traitement de signal), etc..

La mise en oeuvre du procédé de l'invention est ainsi particulièrement avantageuse dans les microcontrôleurs qui, en raison des divers périphériques qu'ils comportent, doivent traiter des files d'interruptions en attente de grande longueur, nécessitant un degré d'imbrication élevé des sous-programmes d'interruption. La présente invention permet alors d'optimiser la gestion de la pile afin de maximaliser le degré d'imbrication.

## Revendications

1. Microprocesseur (MP2, MP3) comprenant une unité centrale (CPU) et un plan mémoire (MEM2, MEM3), l'unité centrale comprenant des registres (CCR-PCL...CR-R_{M+N-1}) contenant des données contextuelles (CTX) et un pointeur de pile (SP, SPH, SPL), le plan mémoire comprenant une pile (STK) pour la sauvegarde de données contextuelles (CTX1-CTXj), l'unité centrale étant agencée pour sauvegarder des données contextuelles lors - d'un basculement d'un premier à un second programme,
**caractérisé en ce que** l'unité centrale est agencée pour sauvegarder des données contextuelles contenues dans un nombre variable de registres qui est fonction de la valeur d'au moins un drapeau (IEA, ISV) stocké dans un registre (CCR, CR) à sauvegarder.

2. Microprocesseur selon la revendication 1, dans lequel l'unité centrale (CPU) est agencée pour modifier la valeur du drapeau (IEA) en fonction du contenu d'un registre (PCE), avant de sauvegarder des données contextuelles contenues dans un nombre variable de registres qui est fonction de la valeur du drapeau (IEA).

3. Microprocesseur selon la revendication 2, dans lequel l'unité centrale est agencée pour modifier la valeur du drapeau (IEA) en fonction du contenu d'un registre d'adressage étendu (PCE) d'un compteur ordinal (PC) de l'unité centrale.

4. Microprocesseur selon la revendication 3, dans lequel l'unité centrale est agencée pour :
- quand le contenu du registre d'adressage étendu est égal à 0, sauvegarder tous les registres de l'unité centrale contenant des données contextuelles à l'exception du registre d'adressage étendu (PCE), ou,
- quand le contenu du registre d'adressage étendu n'est pas égal à 0, sauvegarder tous les registres de l'unité centrale contenant des données contextuelles y compris le registre d'adressage étendu (PCE).

5. Microprocesseur selon l'une des revendications 1 à 4, dans lequel l'unité centrale est agencée pour effectuer un test sur la valeur du drapeau (ISV, IEA) afin de déterminer le nombre de registres à sauvegarder.

6. Microprocesseur selon l'une des revendications 1 à 5, dans lequel l'unité centrale est agencée pour, lors du retour au premier programme :
- restaurer le registre (CCR, CR) contenant le drapeau (IEA, ISV) et,
- restaurer des données contextuelles contenues dans un nombre variable de registres qui est fonction de la valeur du drapeau (IEA, ISV) présent dans le registre restauré.

7. Microprocesseur selon l'une des revendications 1 à 6, dans lequel l'unité centrale est agencée pour sauvegarder en dernier le registre (CCR, CR) contenant le drapeau (IEA, ISV).

8. Microprocesseur selon l'une des revendications 1 à 7, dans lequel le drapeau (IEA) comprend au moins un bit d'un registre (CCR) contenant des drapeaux de code condition.

9. Procédé de gestion de la pile (STK) d'un microprocesseur (MP2, MP3) comprenant une unité centrale (CPU) et un plan mémoire (MEM2, MEM3), l'unité centrale comprenant des registres (CCR-PCL...CR-R_{M+N-1}) contenant des données contextuelles (CTX) et un pointeur de pile (SP), la pile (STK) étant une zone du plan mémoire dédiée à la sauvegarde de données contextuelles lors d'un basculement d'un premier à un second programme,
**caractérisé en ce qu'**il comprend la sauvegarde de données contextuelles contenues dans un nombre variable de registres qui est fonction de la valeur d'au moins un drapeau (IEA, ISV) stocké dans un registre (CCR, CR) à sauvegarder.

10. Procédé selon la revendication 9, comprenant une étape de modification de la valeur du drapeau (IEA) en fonction du contenu d'un registre (PCE), avant la sauvegarde de données contextuelles contenues dans un nombre variable de registres qui est fonction de la valeur du drapeau (IEA).

11. Procédé selon la revendication 10, dans lequel la valeur du drapeau (IEA) est modifiée en fonction du contenu d'un registre d'adressage étendu (PCE) d'un compteur ordinal (PC) de l'unité centrale.

12. Procédé selon la revendication 11, comprenant les étapes suivantes :
- quand le contenu du registre d'adressage étendu est égal à 0, sauvegarder tous les registres de l'unité centrale contenant des données contextuelles à l'exception du registre d'adressage étendu (PCE), ou,
- quand le contenu du registre d'adressage étendu n'est pas égal à 0, sauvegarder tous les registres de l'unité centrale contenant des données contextuelles y compris le registre d'adressage étendu (PCE).

13. Procédé selon l'une des revendications 9 à 12, comprenant une étape de test de la valeur du drapeau (ISV, IEA) pour déterminer le nombre de registres contenant les données à sauvegarder.

14. Procédé selon l'une des revendications 9 à 13, comprenant les étapes suivantes:
- restauration du registre (CCR, CR) contenant le drapeau (IEA, ISV), puis,
- restauration de données contextuelles contenues dans un nombre variable de registres qui est fonction de la valeur du drapeau (IEA, ISV) présent dans le registre restauré.

15. Procédé selon l'une des revendications 9 à 14, dans lequel le registre (CCR, CR) contenant le drapeau (IEA, ISV) est sauvegardé le dernier et est restauré le premier.

16. Procédé selon l'une des revendications 9 à 15, dans lequel le drapeau (IEA) est formé par au moins un bit d'un registre (CCR) contenant des drapeaux de code condition.

## Claims

1. A microprocessor (MP2, MP3) comprising a central processing unit (CPU) and a memory array (MEM2, MEM3), the central processing unit comprising registers (CCR-PCL ... CR-R_{M+N-1}) containing contextual data (CTX) and a stack pointer (SP, SPH, SPL), the memory array comprising a stack (STK) for saving contextual data (CTX1-CTXj), the central processing unit being arranged for saving contextual data upon a switch from a first to a second program,
**characterized in that** the central processing unit is arranged for saving contextual data contained in a variable number of registers that varies according to the value of at least one flag (IEA, ISV) stored in a register (CCR, CR) to be saved.

2. Microprocessor according to claim 1, wherein the central processing unit (CPU) is arranged for changing the value of the flag (IEA) according to the content of a register (PCE), before saving contextual data contained in a variable number of registers that varies according to the value of the flag (IEA).

3. Microprocessor according to claim 2, wherein the central processing unit is arranged for changing the value of the flag (IEA) according to the content of an extended addressing register (PCE) of a program counter (PC) of the central processing unit.

4. Microprocessor according to claim 3, wherein the central processing unit is arranged for:
- when the content of the extended addressing register is equal to 0, saving all the registers of the central processing unit containing contextual data except for the extended addressing register (PCE), or,
- when the content of the extended addressing register is not equal to 0, saving all the registers of the central processing unit containing contextual data, including the extended addressing register (PCE).

5. Microprocessor according to one of claims 1 to 4, wherein the central processing unit is arranged for performing a test on the value of the flag (ISV, IEA) so as to determine the number of registers to be saved.

6. Microprocessor according to one of claims 1 to 5, wherein the central processing unit is arranged for, upon the return to the first program:
- restoring the register (CCR, CR) containing the flag (IEA, ISV) and,
- restoring contextual data contained in a variable number of registers that varies according to the value of the flag (IEA, ISV) present in the restored register.

7. Microprocessor according to one of claims 1 to 6, wherein the central processing unit is arranged for saving the register (CCR, CR) containing the flag (IEA, ISV) last.

8. Microprocessor according to one of claims 1 to 7, wherein the flag (IEA) comprises at least one bit of a register (CCR) containing condition code flags.

9. A method for managing the stack (STK) of a microprocessor (MP2, MP3) comprising a central processing unit (CPU) and a memory array (MEM2, MEM3), the central processing unit comprising registers (CCR-PCL...CR-R_{M+N-1}) containing contextual data (CTX) and a stack pointer (SP), the stack (STK) being a zone of the memory array dedicated to saving contextual data upon a switch from a first to a second program,
**characterized in that** it comprises saving contextual data contained in a variable number of registers that varies according to the value of at least one flag (IEA, ISV) stored in a register (CCR, CR) to be saved.

10. Method according to claim 9, comprising a step of changing the value of the flag (IEA) according to the content of a register (PCE), before saving contextual data contained in a variable number of registers that varies according to the value of the flag (IEA).

11. Method according to claim 10, wherein the value of the flag (IEA) is changed according to the content of an extended addressing register (PCE) of a program counter (PC) of the central processing unit.

12. Method according to claim 11, comprising the following steps:
- when the content of the extended addressing register is equal to 0, saving all the registers of the central processing unit containing contextual data except for the extended addressing register (PCE), or,
- when the content of the extended addressing register is not equal to 0, saving all the registers of the central processing unit containing contextual data, including the extended addressing register (PCE).

13. Method according to one of claims 9 to 12, comprising a step of testing the value of the flag (ISV, IEA) to determine the number of registers containing the data to be saved.

14. Method according to one of claims 9 to 13, comprising the following steps:
- restoring the register (CCR, CR) containing the flag (IEA, ISV), then,
- restoring contextual data contained in a variable number of registers that varies according to the value of the flag (IEA, ISV) present in the restored register.

15. Method according to one of claims 9 to 14, wherein the register (CCR, CR) containing the flag (IEA, ISV) is saved last and is restored first.

16. Method according to one of claims 9 to 15, wherein the flag (IEA) is formed by at least one bit of a register (CCR) containing condition code flags.

## Patentansprüche

1. Mikroprozessor (MP2, MP3), eine Zentraleinheit (CPU) und eine Speicherebene (MEM2, MEM3) umfassend, wobei die Zentraleinheit Register (CCR-PCL,... CR-R_{M+N-1}) enthält, die programmbezogene Daten (CTX) enthalten und einen Stapelzeiger (SP, SPH, SPL), wobei die Speicherebene einen Stapelspeicher (STK) für die Sicherung programmbezogener Daten (CTX1-CTXj) umfasst und die Zentraleinheit dafür eingerichtet ist, beim Wechsel von einem ersten zu einem zweiten Programm programmbezogene Daten zu sichern,
**dadurch gekennzeichnet, dass** die Zentraleinheit dafür eingerichtet ist, programmbezogene Daten zu sichern, die sich in einer veränderlichen Anzahl an Registern befinden, Anzahl, die vom Wert mindestens einer Markierung (IEA, ISV) abhängig ist, die in einem zu sichernden Register (CCR, CR) gespeichert ist.

2. Mikroprozessor nach Patentanspruch 1, in dem die Zentraleinheit (CPU) dafür eingerichtet ist, den Wert der Markierung (IEA) in Abhängigkeit vom Inhalt eines Registers (PCE) zu ändern, bevor sie programmbezogene Daten sichert, die in einer veränderlichen Anzahl an Registern enthalten sind, Anzahl, die vom Wert der Markierung (IEA) abhängt.

3. Mikroprozessor nach Patentanspruch 2, in dem die Zentraleinheit (CPU) dafür eingerichtet ist, den Wert der Markierung (IEA) in Abhängigkeit vom Inhalt eines Registers einer erweiterten Adresse (PCE) eines Stellenzählers der Zentraleinheit zu ändern.

4. Mikroprozessor nach Patentanspruch 3, in dem die Zentraleinheit dafür eingerichtet ist:
- alle Register der Zentraleinheit, die programmbezogene Daten enthalten, zu sichern, wenn der Inhalt des Registers der erweiterten Adresse gleich 0 ist, außer dem Register der erweiterten Adresse (PCE), oder
- alle Register der Zentraleinheit, die programmbezogene Daten enthalten, einschließlich des Registers der erweiterten Adresse (PCE) zu sichern, wenn der Inhalt des Registers der erweiterten Adresse nicht gleich 0 ist.

5. Mikroprozessor nach einem der Patentansprüche 1 bis 4, in dem die Zentraleinheit dafür eingerichtet ist, einen Test des Wertes der Markierung (ISV, IEA) vorzunehmen, um die Anzahl der zu sichernden Register zu bestimmen.

6. Mikroprozessor nach einem der Patentansprüche 1 bis 5, in dem die Zentraleinheit dafür eingerichtet ist, bei der Rückkehr zum ersten Programm
- das Register (CCR, CR), das die Markierung (IEA, ISV) enthält, wiederherzustellen und
- die programmbezogenen Daten wiederherzustellen, die in einer veränderlichen Anzahl an Registern enthalten sind, Anzahl, die vom Wert der Markierung (IEA, ISV) abhängt, der sich im wiederhergestellten Register befindet.

7. Mikroprozessor nach einem der Patentansprüche 1 bis 6, in dem die Zentraleinheit dafür eingerichtet ist, als Letztes das Register (CCR, CR) zu sichern, das die Markierung (IEA, ISV) enthält.

8. Mikroprozessor nach einem der Patentansprüche 1 bis 7, in dem die Markierung (IEA) mindestens ein Bit eines Registers (CCR) umfasst, das Zustandsmarkierungen enthält.

9. Verfahren zur Verwaltung des Stapelspeichers (STK) eines Mikroprozessors (MP2, MP3), eine Zentraleinheit (CPU) und eine Speicherebene (MEM2, MEM3) umfassend, wobei die Zentraleinheit Register (CCR-PCL,... CR-R_{M+N-1}) umfasst, die programmbezogene Daten (CTX) enthalten, und einen Stapelzeiger (SP), wobei der Stapelspeicher (STK) ein Bereich der Speicherebene ist, der beim Übergang von einem ersten zu einem zweiten Programm zur Sicherung der programmbezogenen Daten dient,
**dadurch gekennzeichnet, dass** es die Sicherung programmbezogener Daten umfasst, die sich in einer veränderlichen Anzahl an Registern befinden, Anzahl, die vom Wert mindestens einer Markierung (IEA, ISV) abhängig ist, die in einem zu sichernden Register (CCR, CR) gespeichert ist.

10. Verfahren nach Patentanspruch 9, einen Schritt der Änderung des Wertes der Markierung (IEA) in Abhängigkeit vom Inhalt eines Registers (PCE) vor der Sicherung programmbezogener Daten umfassend, die sich in einer veränderlichen Anzahl an Registern befinden, die vom Wert der Markierung (IEA) abhängig ist.

11. Verfahren nach Patentanspruch 10, in dem der Wert der Markierung (IEA) in Abhängigkeit vom Inhalt eines Registers einer erweiterten Adresse (PCE) eines Stellenzählers (PC) der Zentraleinheit geändert wird.

12. Verfahren nach Patentanspruch 11, die folgenden Schritte umfassend:
- Sicherung aller Register der Zentraleinheit, die programmbezogene Daten enthalten, wenn der Inhalt des Registers der erweiterten Adresse gleich 0 ist, außer dem Register der erweiterten Adresse (PCE), oder
- Sicherung aller Register der Zentraleinheit, die programmbezogene Daten enthalten, einschließlich des Registers der erweiterten Adresse (PCE), wenn der Inhalt des Registers der erweiterten Adresse nicht gleich 0 ist.

13. Verfahren nach einem der Patentansprüche 9 bis 12, einen Schritt zum Testen des Wertes der Markierung (ISV, IEA) umfassend, um die Anzahl der Register zu bestimmen, die die zu sichernden Daten enthalten.

14. Verfahren nach einem der Patentansprüche 9 bis 13, die folgenden Schritte umfassend:
- Wiederherstellung des Registers (CCR, CR), das die Markierung (IEA, ISV) enthält, und
- Wiederherstellung programmbezogener Daten, die in einer veränderlichen Anzahl an Registern enthalten sind, Anzahl, die vom Wert der Markierung (IEA, ISV) abhängt, der sich im wiederhergestellten Register befindet.

15. Verfahren nach einem der Patentansprüche 9 bis 14, in dem das Register (CCR, CR), das die Markierung (IEA, ISV) enthält, als Letztes gesichert und als Erstes wiederhergestellt wird.

16. Verfahren nach einem der Patentansprüche 9 bis 15, in dem die Markierung (IEA) aus mindestens einem Bit eines Registers (CCR) besteht, das Markierungen des Zustandes enthält.
